# EUROPEAN PATENT APPLICATION

(11) **EP 1 938 778 A1**
(43) Date of publication of application: **02.07.2008**
(21) Application number: 05799739.7
(22) Date of filing: 19.10.2005
(51) Int. Cl.: A61G 3/06, E01F 13/04, B60N 5/00, B62D 47/02

(54) **RETRACTABLE GUARD RAIL AND USE THEREOF IN VEHICLE ACCESS PLATFORMS FOR PERSONS OF REDUCED MOBILITY**

(71) Applicant: Autocares Roncero, S.L., 45700 Consuegra (ES)
(72) Inventor: RONCERO GOMEZ, Juan Vicente, Consuegra, E- 45700 (ES)
(74) Representative: Esteban Perez-Serrano, Maria Isabel
(86) International application number: PCT/ES2005/070147
(87) International publication number: WO 2007/045700

(57) **Abstract**

The present invention refers to a retracting guard rail and its use on vehicle access platform for disabled persons, the principal vehicles for which this invention is intended being buses and coaches. This guard rail is **characterised by** the fact of consisting of one or more guides anchored to a rigid structure through which there slide one or more columns to which a structure is attached in the form of a framework, where the raising and lowering movement is due to the driving action of a motor or an actuator, and after lowering it then remains retracted in a housing. The use of guard rails associated with access platforms to vehicles such as coaches or buses for disabled persons is **characterised in that** a means of protection is established on one or more sides of the platform well through the guard rail guide or guides being anchored to the structure of the vehicle in the interior of the platform well.

## Description

### OBJECT OF THE INVENTION

The present invention refers to a retracting guard rail and its use on vehicle access platforms for disabled persons, the end use of this invention being mainly coaches and buses.

The guard rail is characterised by the fact of consisting of one or more guides anchored to a rigid frame through which there slide one or more columns to which a structure is attached by way of a framework where the ascending and descending movement is due to the drive supplied by a motor or an actuator, being retracted in a housing after descent.

The use of guard rails associated with access platforms to such vehicles as buses or coaches for disabled persons is characterised in that a means of protection is established on one or more sides of the platform well by anchoring the guard rail guide or guides to the structure of the vehicle on the inside of the platform well.

### BACKGROUND OF THE INVENTION

Access devices for disabled persons to coaches and buses are known in the prior art.

On the market there are platforms in which the access to them from the street takes place outside the perimeter of the coach or bus, i.e. those platforms which are articulated or folding. There are also those which are located inside the vehicle, in a compartment in same, and which are of vertical movement, so that the access takes place from the street within the perimeter of the vehicle. Folding and articulated platforms have the disadvantage of needing a large space for their extension, besides that required for manoeuvring a wheelchair. However, vertical movement platforms situated inside the vehicle need a smaller gap between the bus and the pavement, besides having a faster loading speed and less maintenance through reducing the number of their components.

However, vertical platforms situated inside the vehicle have the drawback that in the platform lowering position the access to its well from the interior of the vehicle is free, so that a passenger could fall down it. This drawback could be overcome by placing a conventional guard rail around the platform well. The disadvantage of this solution is that the well occupied by the platform would then be made inaccessible to passengers moving around inside the vehicle.

The present invention proposes a retracting guard rail which overcomes the preceding drawback, as it is situated in the retracted position below floor level when the platform is at its maximum height, i.e. at vehicle floor level, and in the deployed position when the platform descends down the well to street level.

### DESCRIPTION OF THE INVENTION

The present invention refers to a retracting guard rail and to its use on vehicle access platforms for disabled persons.

The retracting guard rail advocated is characterised in that it consists of one or more guides anchored to a rigid frame through which there slide one or more columns to which a structure in the form of a framework is attached. The whole unit is stowed in a box below the level of the vehicle floor and in which the guard rail is raised and lowered by the drive action of a motor or an actuator.

In the case of the preferred example the raising and lowering movement takes place due to the action of a motor with a drive mechanism that converts the rotary movement of the electric motor shaft into a longitudinal movement of the guard rail.

From amongst the different layouts that may be adopted by the guard rail, in the preferred embodiment the one has been developed where the guard rail consists of two guides and in which horizontal bars are situated by way of a framework, through considering that this arrangement illustrates the object of the invention clearly. However, other guard rail layouts in which the number of guides may be variable and the framework may be made up of other elements, such as screens, grilles, are regarded as comprised within the object of this invention.

The retracting guard rail thus described is used as an element of protection for the people who may be inside the vehicle in which there is an access platform for disabled persons, as the well for this is located in the aisle of said vehicle. For platforms of this type it is necessary to make use of an element that should represent an access barrier to the platform well in the coach floor at the time when the platform is not at its highest position, thereby preventing the possibility of a person being able to fall into this well.

The guard rail or rails would enclose the platform well, with their guides situated inside it. The lowering and raising of the guard rails could either be independent of the platform raising and lowering, or else be synchronised with same.

### DESCRIPTION OF THE DRAWINGS

The present descriptive report is supplemented with a set of drawings illustrating the preferred embodiment, but never limiting the scope of the invention.

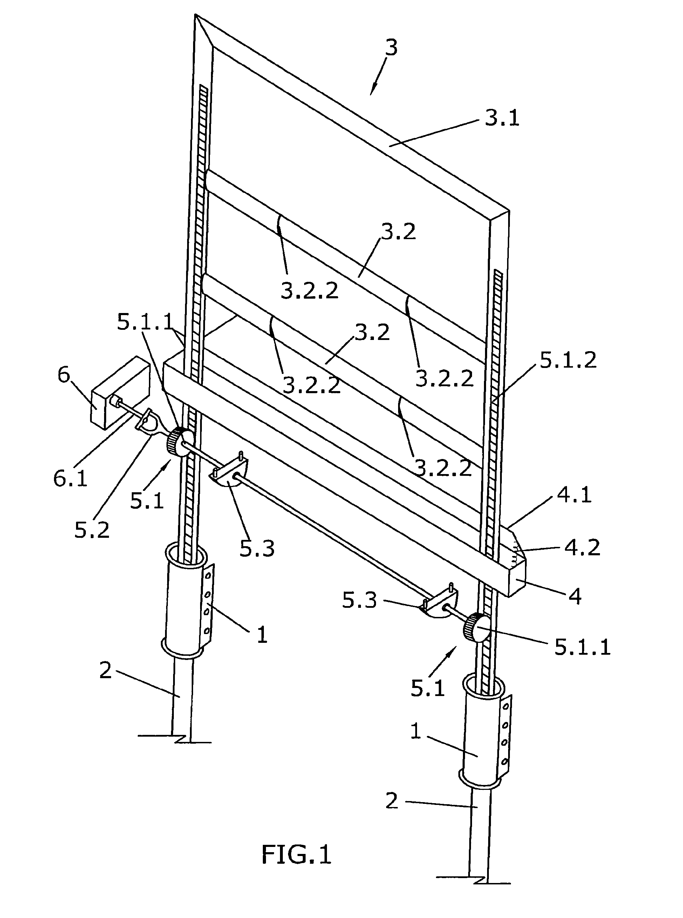

Figure 1 is a diagrammatic perspective representation of the retracting guard rail.

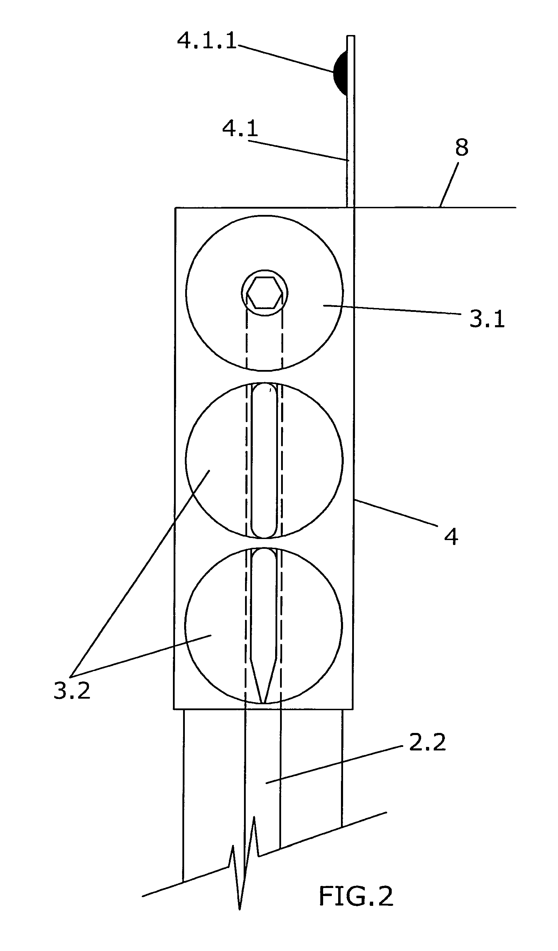

Figure 2 is an elevational view of the box with the horizontal bars housed.

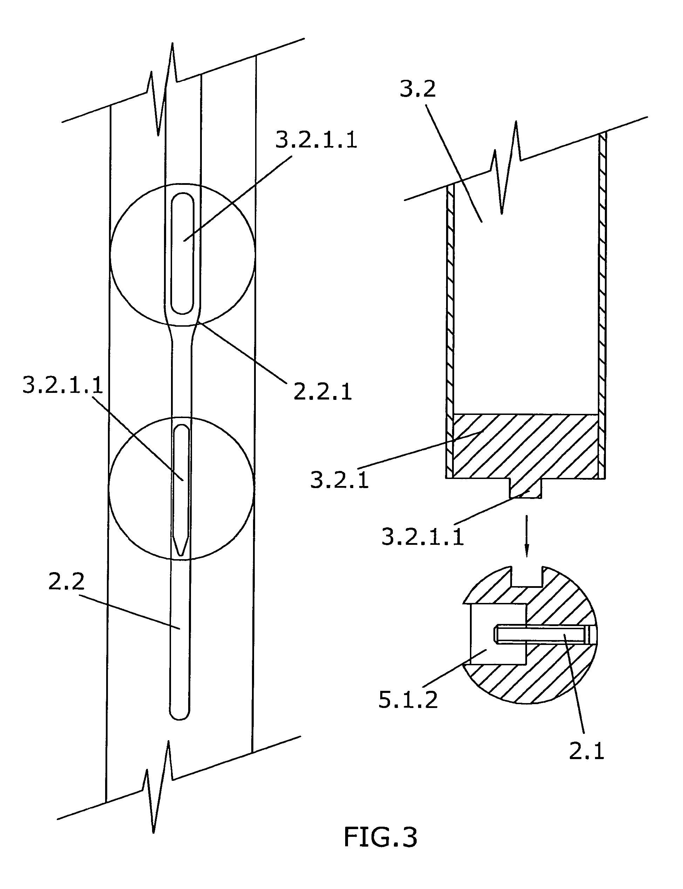

Figure 3 is a sectional and elevational view of the coupling of the horizontal and vertical rails.

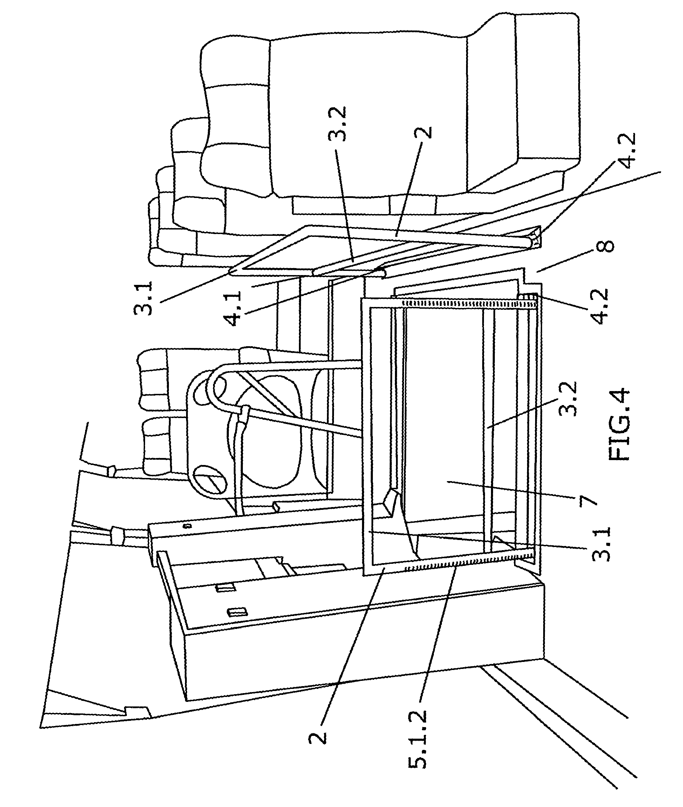

Figure 4 is a perspective view from the interior of the vehicle of the platform well with the rails deployed.

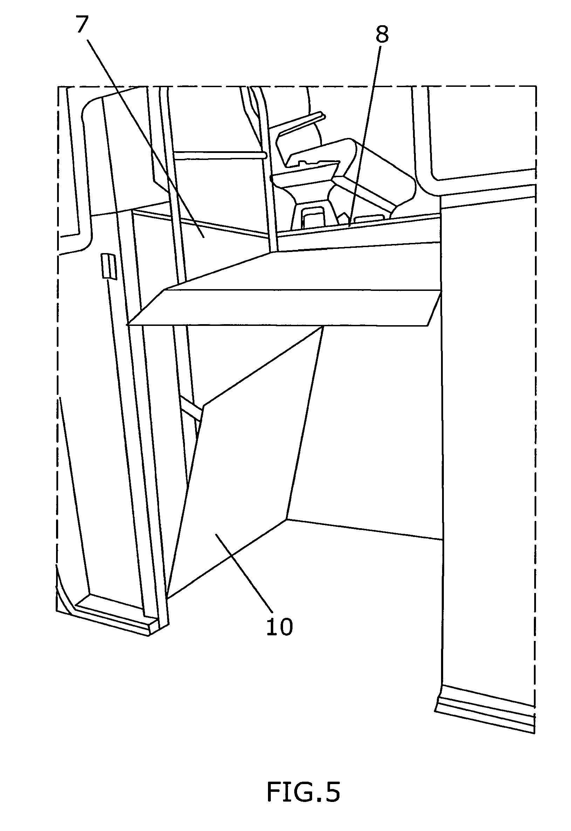

Figure 5 is a perspective view of the platform well, with the platform in an intermediate position, as seen from the exterior of the vehicle.

### PREFERRED EMBODIMENT OF THE INVENTION

The present invention refers to a retracting guard rail and its use on vehicle access platforms for disabled persons.

This invention is characterised by the fact that the retracting guard rail consists of one or more guides (1) anchored to a rigid structure through which there slide one or more columns (2) to which a structure is attached in the form of a framework (3), which in the deployed state of same would prevent a person from passing through it, the whole unit being stowed in a box (4) situated below the level of the floor (8) of the vehicle and in which the raising and lowering of the guard rails takes place as a result of the drive action of a motor or an actuator.

In the case of the preferred embodiment the lowering and raising movement of the guard rails is due to the action of a motor (6) with a drive mechanism (5) which converts the rotary movement of the shaft (6.1) of the electric motor (6) into a longitudinal movement of the rail.

The drive mechanism (5) converts the rotary movement of the shaft (6.1) of the electric motor (6) into a longitudinal movement of the rail consisting of a rack-and-pinion mechanism (5.1). There is a cardan joint drive (5.2) between the electric motor (6) and the pinion (5.1.1).

In the event of there being more than one column transmitting the movement from the electric motor, drive locking bearings (5.3) are positioned between the pinions associated with them.

In this case, the columns are solid vertical bars that have a rack (5.1.2) attached by means of screws (2.1), the framework being made up of two vertical bars (2) linked by two or more horizontal cylindrical hollow bars (3.1, 3.2), the upper one (3.1) being fixed and the rest (3.2) sliding along the vertical bars (2). This sliding is achieved due to the fact that the horizontal bars (3.2) have pieces (3.2.1) inserted in their ends which are provided on their outer end with a shoulder (3.2.1.1) machined in the form of a key facing a longitudinal groove (2.2) in the vertical bars (2).

The retracting guard rail advocated has a box (4) immediately below the level of the floor (8) of the vehicle which is provided with a folding cover (4.1) at floor (8) level. The opening of same (4.1) takes place as a result of the force exerted by the guard rail in its ascent. The lowering of the cover (4.1) comes about through a spring (4.2) anchored to same (4.1), once the rail has been retracted.

At the time of the retracting of the guard rail, the horizontal sliding bars (3.2) move along the groove (2.2) in the vertical bars (2) until they are stowed away inside the box (4). When the raising of the guard rail takes place, the horizontal bars (3.2) are deployed as a result of the fact that the longitudinal groove (2.2) in the vertical bars (2) has narrowings (2.2.1) for securing the position of the horizontal sliding bars (3.2).

One of the drawbacks that may be presented by the retracting guard rail device described is the noise made by the impact of metal elements with one another. To prevent this, the horizontal sliding bars (3.2) have rubber O-rings (3.2.2). The same things happens with the cover (4.1), which is provided with a longitudinal piece (4.1.1) of plastic material on the inner side to prevent the noise produced by the impact with the vertical bars (2).

The guard rail thus described is used for protecting the vehicle access platform wells (7) for disabled persons. The platforms on which use is made of this guard rail are those which are located in an interior well (7) in the vehicle, in this case buses or coaches. Said platforms have a vertical movement, between their lowest position, coinciding with the ground, and their highest position, coinciding with the floor (8) of the bus or coach, i.e. the well (7) would be partly situated in the aisle of said vehicle.

For platforms of this type it is therefore necessary to make use of an element that represents an access barrier to the platform well (7) from the floor (8) of the coach, at the time when the platform is not at its highest position, thereby preventing the possibility of a person being able to fall into said well (7). The fact of making use of a retracting guard rail, i.e. that when the platform is at its highest position, the guard rail is retracted, means that people may move freely over the platform and, therefore, along the whole aisle of the bus without having their way blocked.

The use of retracting guard rails together with the above-described platforms is characterised in that a means of protection is established on one of the sides of the platform well (7) through the guard rail guide or guides (1) being anchored to the structure of the vehicle in the interior of the platform well (7).

The retracting guard rails may be used in combination with other rails of similar or different features, for example a guard rail on each side of the platform well, combined with fixed guard rails or with an L-shaped guard rail, provided that they are arranged around the platform well (7) on the floor (8) of the vehicle.

The operation of the guard rail, and therefore of the platform, is linked to the fact of the lower hatch (10) of the platform well being in the folded position. This hatch has the function of closing the platform well at the bottom, thus reducing noise and vibration when the vehicle is moving.

For the purpose of reducing both the noise and the vibration, the edges of the covers (4) are covered with a plastic material to assist their sealing. This arrangement, combined with an inclined profile on the edge of the platform opposing a profile on the upper edge of the well (7), means that the floor (8) of the bus is sealed.

The raising and lowering of the guard rails may be associated with the movement of the platform, i.e. the lowering of the platform brings about, for instance, by means of limit switches, the raising of the guard rail. On this invention it is also possible for the raising of the guard rail not to be linked with the raising or lowering of the platform.

The essential nature of this invention is not altered by variations in materials, shape, size and arrangement of the component parts, which are described on a non-restrictive basis, with just sufficient detail for it to be reproduced by an expert.

## Claims

1. Retracting guard rail **characterised in that** it consists of one or more guides (1) anchored to a rigid structure through which there slide one or more columns (2) to which is attached a structure in the form of a framework (3), where the raising and lowering movement is brought about by means of the drive action of a motor or an actuator and which is recessed in a housing after lowering(4).

2. Retracting guard rail, according to claim 1, **characterised in that** the raising and lowering movement is brought about by the action of a motor with a drive mechanism (5) which converts the rotary movement of the shaft (6.1) of the electric motor (6) into a longitudinal movement of the guard rail, consisting of a rack-and-pinion mechanism(5.1).

3. Retracting guard rail, according to claim 1, **characterised in that** between the electric motor (6) and the pinion (5.1.1) there is a cardan drive (5.2).

4. Retracting guard rail, according to claims 1 and 2, **characterised in that** the columns (2) consist of one or more solid vertical bars that have a rack (5.1.2) secured by means of screws (2.1).

5. Retracting guard rail, according to claim 1, **characterised in that** the framework (3) consists of one or more horizontal bars (3.1, 3.2) linking the vertical bars(2).

6. Retracting guard rail, according to claim 5, **characterised in that** the horizontal bars (3.1, 3.2) are round section and hollow, the top one (3.1) being fixed and the rest (3.2) sliding along the vertical bars (2).

7. Retracting guard rail, according to claim 6, **characterised in that** the horizontal bars (3.2) are fitted with pieces (3.2.1.) inserted in the ends which have a shoulder (3.2.1.1) machined on their outer side in the form of a key matching up with a longitudinal groove (2.2) in the vertical bars (2), which slide in relation to one (3.2) another(2).

8. Retracting guard rail, according to claim 1, **characterised in that** the longitudinal groove (2.2) in the vertical bars (2) is provided with a number of narrowings (2.2.1) in accordance with the number of horizontal bars (3.2) for fixing the position of same (3.2).

9. Retracting guard rail, according to claim 1, **characterised in that** the sliding horizontal bars (3.2) have 0-ring seals (3.2.2) for reducing the noise of the impact between them (3.2).

10. Retracting guard rail, according to claim 1, **characterised in that** the box (4) has a folding cover (4.1), situated at the level of the floor (8) of the vehicle, which is opened by the force exerted by the guard rail as it rises and which has a spring (4.2) for closing it when the rail is retracted.

11. Retracting guard rail, according to claim 1, **characterised in that** the cover (4.1) has a longitudinal piece (4.1.1) of plastic material on its inner face for reducing the noise resulting from impact with the vertical bars (2).

12. Retracting guard rail, according to claim 1, **characterised in that** the horizontal sliding rails (3.2) retract until they are stowed inside the box (4).

13. Use of the retracting rail defined in claim 1 for the protection of vehicle access platforms for disabled persons, **characterised in that** a means of protection is established on one or more sides of the platform well (7), as the guard rail guide or guides (1) are anchored to the structure of the vehicle in the interior of the platform well (7).

14. Use of the retracting rail as defined in claim 13, **characterised in that** the sides of the platform well (7) are protected with conventional guard rails.

15. Use of the retracting rail as defined in claim 13, **characterised in that** the guard rail or rails are disposed emerging from the floor (8) of the vehicle surrounding the platform well(7).

16. Use of the retracting rail as defined in claim 13, **characterised in that** the raising and lowering of the guard rail or rails is synchronised with the movement of the platform.

17. Use of the retracting rail as defined in claim 13, **characterised in that** the raising and lowering of the guard rail or rails is not synchronised with the movement of the platform.

18. Use of the retracting rail as defined in claim 13, **characterised in that** for the operation of the guard rail the bottom hatch (10) in the platform well has to be in the folded position.

19. Use of the retracting rail as defined in claim 13, **characterised in that** for the sealing of the platform-guard rail assembly there is a plastic material at the edge of the cover (4) in combination with an inclined profile of the platform edge opposing the profile of the upper edge of the well (7).
